# EUROPEAN PATENT APPLICATION

(11) **EP 4 571 978 A1**
(43) Date of publication of application: **18.06.2025**
(21) Application number: 24785398.9
(22) Date of filing: 19.03.2024
(51) Int. Cl.: H01M 50/264, H01M 50/291, H01M 10/65, H01M 50/204

(54) **BATTERY PACK**

(30) Priority: 07.04.2023 KR 20230046089
(71) Applicant: LG Energy Solution Ltd., 07335 Seoul (KR)
(72) Inventor: JANG, Byung Do, Daejeon 34122 (KR); CHOI, Jong Hwa, Daejeon 34122 (KR)
(74) Representative: Plasseraud IP
(86) International application number: PCT/KR2024/095585
(87) International publication number: WO 2024/210709

(57) **Abstract**

A battery pack, may include a base plate, a side plate coupled to the base plate along a periphery of the base plate to form an accommodated space therein, a cross beam coupled to the base plate to transversely divide the accommodated space on the base plate, and a plurality of battery cell assemblies mounted in the accommodated space divided by the cross beam. In addition, the battery cell assemblies may have side frames fixed to the cross beam, and the side frames of adj acent battery cell assemblies along a longitudinal direction may share an upper surface of the cross beam located therebetween.

## Description

### [Technical Field]

The present disclosure relates to a battery pack, and more particularly to a battery pack that can extend the lifespan of a battery pack with minimal maintenance by enabling replacement of some of the plurality of battery cells mounted in the battery pack when a problem occurs with those cells, thereby there is no need to disuse the overall battery pack.

The present application claims priority to Korean Patent Application No. 10-2023-0046089, filed on April 07, 2023, all of which are incorporated herein by reference.

### [Background Art]

In order to improve the space utilization rate of a battery pack, a battery pack with a cell-to-pack structure has been proposed. The cell-to-pack structure has the advantage that the plurality of battery cells can be directly assembled into the battery pack without a modularizing structure, thereby improving the space utilization rate of the battery pack.

As a separate module housing is omitted or simplified in a cell-to-pack structure, new structures are proposed for efficiently mounting a plurality of battery cells in a pack case. For example, a structure can be designed in which a plurality of battery cells forms a battery cell assembly having a side frame coupling to a plurality of battery cells, and the side frame of the battery cell assembly is fixed to a cross beam of the pack case.

Alternatively, the side frames of adjacent battery cell assemblies may be overlapped and fixed to the base plate to serve as pack cross beams (meaning cross beams provided in the pack case). **In** addition, a thermal resin may be interposed between the bottom surface of the battery cell assembly to which the battery cells are exposed and the base plate of the pack case to facilitate conduction heat emission of the battery cell assembly, and the stiffening of the thermal resin may firmly fix the battery cell assembly.

However, although the cell-to-pack structure of the battery pack utilizing the side frame of the battery cell assembly to omit the structure of the pack cross beam and to fix the battery cell assembly through the stiffening of the thermal resin has many advantages in terms of improving the space utilization rate of the battery pack by assembling a plurality of battery cells directly into the battery pack without a modularization structure, such a cell-to-pack structure has disadvantages in terms of maintenance of the battery pack. In other words, such a cell-to-pack structure makes it very difficult to decompose the battery pack, once assembled, into units of battery cell assemblies.

For example, a cell-to-pack structure in which the side frames of adjacent battery cell assemblies are stacked one by one and fixed to a base plate makes decomposition possible only by removing the battery cell assemblies one by one in the reverse order of assembly, and a structure in which the bottom surface of the battery cell assemblies is fixed by stiffening the thermal resin, may result in the breakage of the battery cells bonded to the thermal resin upon removal of the battery cell assemblies, which may lead to considerable dangerous consequences such as electrolyte leakage.

There is a significant need to develop a battery pack with a cell-to-pack structure that can be easily decomposed down to the battery cell unit, thereby enabling the maintenance of the battery pack by replacing the battery cell even if only one battery cell in the battery pack has a problem, and utilize for the designed lifespan without disuse of the expensive battery pack.

### [Summary]

### [Technical Problem]

The object of the present disclosure is to provide a battery pack having a cell-to-pack structure, wherein any of the battery cell assemblies can be easily removed regardless of the order of assembly, thereby facilitating replacement of a problematic battery cell.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a battery pack, which, in an embodiment, may include a base plate, a side plate coupled to the base plate along a periphery of the base plate to form an accommodated space therein, a cross beam coupled to the base plate to transversely divide the accommodated space on the base plate, and a plurality of battery cell assemblies mounted in the accommodated space divided by the cross beam, wherein the battery cell assemblies may have side frames fixed to the cross beam, and the side frames of adjacent battery cell assemblies along a longitudinal direction may share an upper surface of the cross beam located therebetween.

In one embodiment, the side frame may include side plates wrapping around sides of the battery cell assemblies, and a plurality of supporting blocks projecting with respect to the side plates, wherein the supporting blocks of adjacent battery cell assemblies along the longitudinal direction may occupy non-overlapping areas on the upper surface of the cross beam.

The plurality of supporting blocks may be arranged spaced apart from each other, and the plurality of supporting blocks of adjacent battery cell assemblies along the longitudinal direction may be arranged alternately with respect to the upper surface of the cross beam.

Further, the battery cell assembly may be fixed to the cross beam by bolts vertically passing through the supporting blocks.

According to an embodiment, the battery pack may further include a center beam coupled to the base plate to longitudinally divide the accommodated space on the base plate, wherein the accommodated space can be arranged in a grid by the cross beam and the center beam.

Meanwhile, according to an embodiment of the present disclosure, the battery pack may further include clip bands coupled to the side plates of the side frames to support bottom surfaces of a plurality of battery cells forming the battery cell assembly.

The clip band may include a band body supporting the bottom surface of the plurality of battery cells, and fastening parts bent at both ends of the band body, the fastening parts may include incised bent snap pins, and the side plates of the side frame may include snap grooves in which the snap pins are engaged.

The snap pin may tilt downward with respect to the side plate, and an engagement between the clip band and the side frame may form a snap-fit structure that does not separate under a load of the plurality of battery cells.

Further, a side of the cross beam may include a groove, and the fastening part of the clip band may be inserted into the groove.

Moreover, a contact surface between a bottom surface of the battery cell assembly and the base plate may be interposed with a paste-type gap filler, and the paste-type gap filler may be an unhardened material.

The present disclosure also provides a manufacturing method of a battery pack, which may include preparing a pack case including a base plate, a side plate coupled to the base plate along a periphery of the base plate to form an accommodating space therein, and a cross beam coupled to the base plate to transversely divide the accommodating space on the base plate, inserting a clip band into a groove formed in a surface of the cross beam, and mounting a battery cell assembly in a plurality of accommodating spaces divided by the cross beam.

After the inserting the clip band into the groove, the method may further include applying a paste-type gap filler on the base plate, wherein the paste-type gap filler may be an unhardened material.

Further, the battery cell assembly may include a side frame fixed to the cross beam, wherein the side frames of adjacent battery cell assemblies along a longitudinal direction may share an upper surface of the cross beam located therebetween and do not overlap each other a top and bottom direction.

For example, the side frame may include a side plate wrapping around a side of the battery cell assembly, and a supporting block projecting with respect to the side plate, wherein the supporting blocks of adjacent battery cell assemblies along the longitudinal direction may occupy non-overlapping areas on the upper surface of the cross beam.

In addition, the mounting the battery cell assembly may include fixing the battery cell assemblies to the cross beam by bolts vertically passing through the supporting blocks.

The clip band may include a band body supporting a bottom surface of the plurality of battery cells, and fastening parts bent at both ends of the band body, the fastening parts including incised bent snap pins, and the side plates of the side frame may include snap grooves in which the snap pins are engaged.

Further, the snap pin may tilt downward with respect to the side plate, and an engagement between the clip band and the side frame may form a snap-fit structure that is not separated by a load of the plurality of battery cells, accordingly allowing the clip band to support a bottom surface of the plurality of battery cells including the battery cell assembly during removal of the battery cell assembly.

### [Advantageous Effects]

The battery pack of the present disclosure having the above configuration, wherein the side frames of each of the adjacent battery cell assemblies spaced apart by the cross beam are fixed with respect to the cross beam, and the side frames of each of the battery cell assemblies share one cross beam upper surface but do not overlap each other top and bottom. Accordingly, in the event of a problem with any one battery cell in the assembled battery pack, only the problematic battery cell assembly can be easily removed, regardless of the order of assembly, and the battery pack can be maintained by replacing the problematic battery cell, thereby allowing the battery pack to be utilized to its designed lifespan without disuse of the expensive battery pack.

In addition, when a gap filler is interposed on the contact surface between the bottom surface of the battery cell assembly and the base plate, the gap filler may be an unhardened paste-type gap filler. By the unhardened gap filler, the risk of breakage of the battery cells by the hardened gap filler upon removal of the battery cell assembly is eliminated, thereby facilitating replacement of the problematic battery cells.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate some embodiments of the present disclosure and serve to facilitate understanding of the technical idea of the present disclosure together with the detailed description of the disclosure described below, the present disclosure should not be limitedly interpreted on the basis of the drawings.
FIG. 1 is a perspective view of a battery pack according to the present disclosure.
FIG. 2 is a drawing illustrating a pack case.
FIG. 3 is a drawing illustrating a battery cell assembly spaced between cross beams.
FIG. 4 is a plan view of the battery pack of FIG. 1.
FIG. 5 is a drawing illustrating a structure in which clip bands are disposed on the pack case.
FIG. 6 is a drawing illustrating a structure in which the clip bands are coupled to the battery cell assembly.
FIG. 7 is a cross-sectional view illustrating a structure in which a battery cell assembly is coupled to a clip band disposed on a pack case.
FIG. 8 is a cross-sectional view illustrating a structure in which a battery cell assembly is mounted along a longitudinal direction of the pack case.
FIG. 9 is a drawing illustrating a structure for removal of any one battery cell assemblies from a pack case.

### [Detailed Description]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a battery pack, which, in one example, includes a base plate, a side plate coupling to the base plate along a periphery thereof to form an accommodated space therein, and a cross beam coupling to the base plate to transversely divide the accommodated space inside the base plate, and a plurality of battery cell assemblies mounted in the receiving space divided by the cross beam, wherein the battery cell assemblies have side frames fixed with respect to the cross beam, and the side frames of adjacent battery cell assemblies along a longitudinal direction share an upper surface of the cross beam located therebetween and do not overlap each other top and bottom.

In addition, the paste-type gap filler interposed on the contact surface between the bottom surface of the battery cell assembly and the base plate may be an unhardened material.

In such a battery pack of the present disclosure, the side frames of each adjacent battery cell assembly spaced apart by the cross beam are fixed with respect to the cross beam, wherein the side frames of each battery cell assembly share one cross beam upper surface but do not overlap each other top and bottom.

Accordingly, even if a problem occurs with only one battery cell in the assembled battery pack, only the problematic battery cell assembly can be easily removed regardless of the order of assembly, and the battery pack can be maintained by replacing the problematic battery cell, thereby enabling the battery pack to be utilized to the designed lifespan without disuse of the expensive battery pack.

In some embodiments, where a gap filler is interposed on the contact surface between the bottom surface of the battery cell assembly and the base plate, the gap filler may be an unhardened paste-type gap filler. By the unhardened gap filler, the risk of breakage of the battery cell by the hardened gap filler during removal of the battery cell assembly is eliminated, thereby facilitating replacement of the problematic battery cell.

Hereinafter, specific embodiments of a battery pack 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

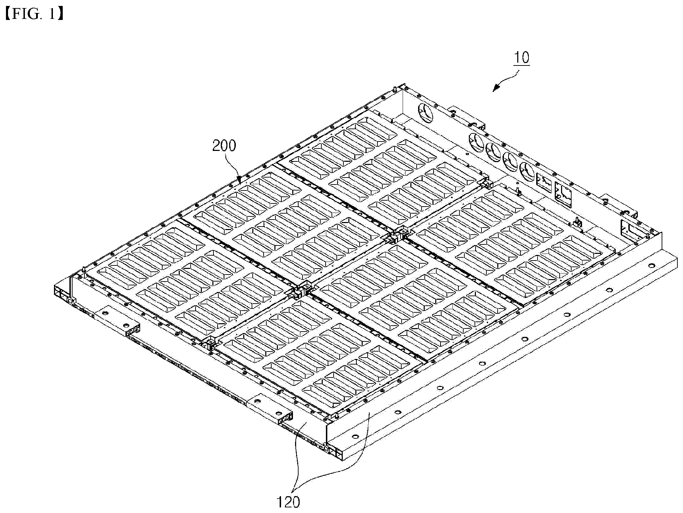

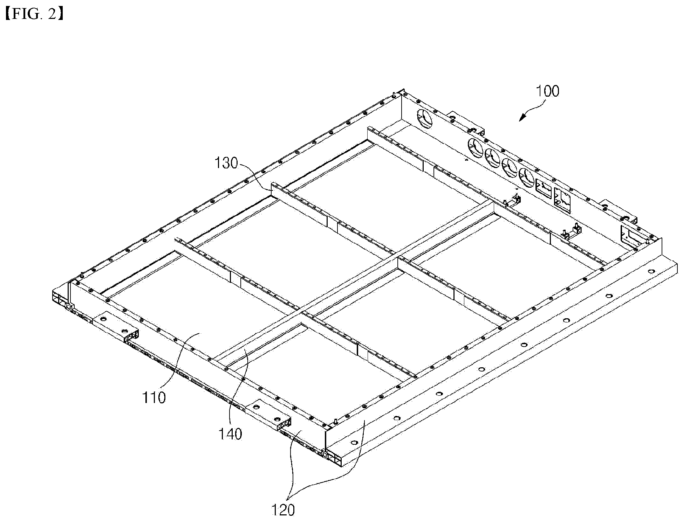

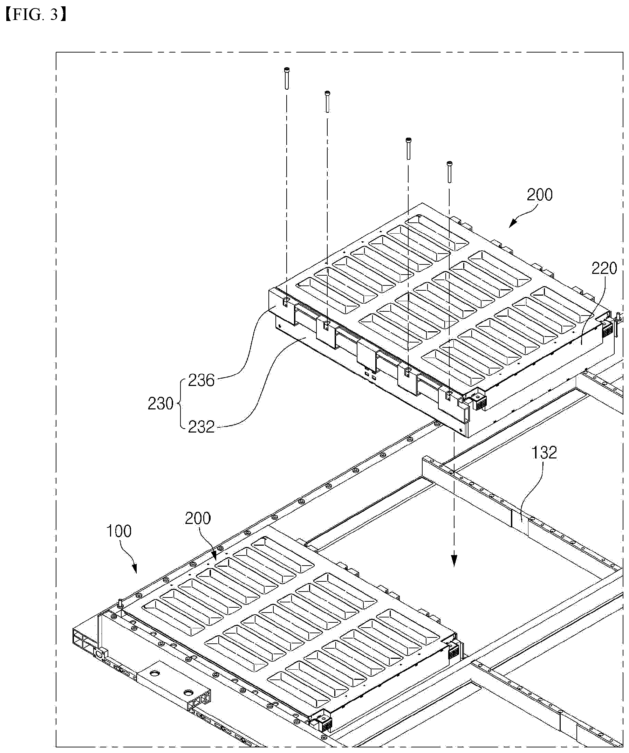

FIG. 1 is a perspective view of a battery pack according to the present disclosure, FIG. 2 is a drawing illustrating a pack case, and FIG. 3 is a drawing illustrating a battery cell assembly spaced between cross beams.

Referring to FIG. 1 to FIG. 3, the pack case 100, which forms the body of the battery pack 10, includes a base plate 110, a side plate 120 coupling to the base plate 110 along a periphery thereof to form an accommodated space therein, and a cross beam 130 coupling to the base plate 110 to transversely divide the accommodated space inside the base plate 110. According to an embodiment, the pack case 100 may further include a center beam 140 coupling to the base plate 110 to longitudinally divide the accommodated space inside the base plate 110, as shown in the accompanying FIG. 2, such that the accommodated space of the pack case 100 may be arranged in a grid by the cross beam 130 and the center beam 140.

Each of the storage spaces divided by the cross beams 130 is mounted with a battery cell assembly 200, thereby allowing the battery pack 10 to accommodate a plurality of battery cell assemblies 200 to satisfy a design capacity. Referring to FIG. 3, the battery cell assembly 200 includes a plurality of battery cells 210 and a busbar frame assembly 220 that mechanically and electrically coupled to the plurality of battery cells 210 at both ends of a transverse direction from which leads of the battery cells 210 are projecting. The battery cell assembly 200 also includes side frames 230 that protect the battery cells 210 at the longitudinal direction both sides.

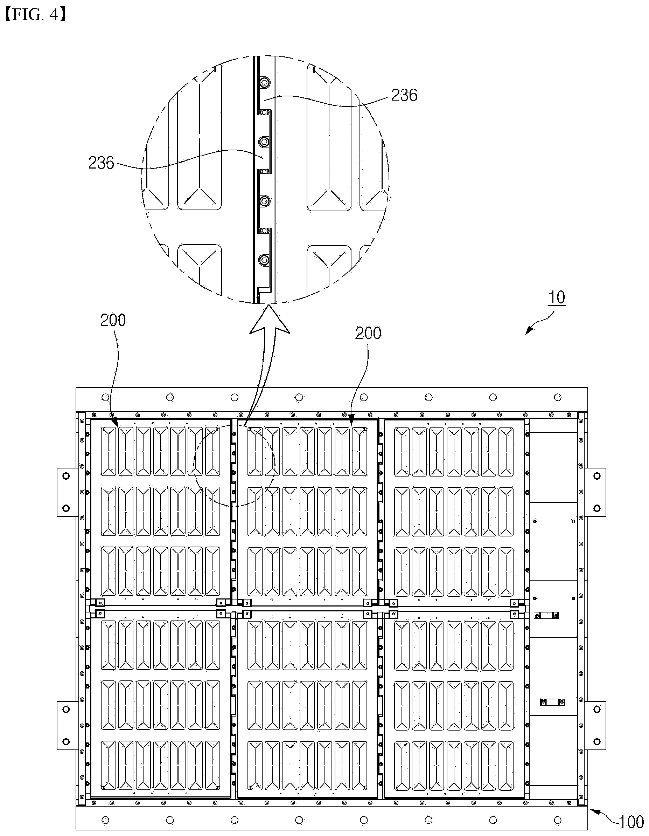

FIG. 4 is a plan view of the battery pack 10, which, when examined in conjunction with FIG. 3, shows that the side frames 230 of adjacent battery cell assemblies 200 along the longitudinal direction share the upper surface of the cross beams 130 located therebetween and do not overlap each other top and bottom. For example, in the embodiment illustrated, the side frames 230 include side plates 232 that wrap around the sides of the battery cell assemblies 200 and supporting blocks 236 that project with respect to the side plates 232, and the supporting blocks 236 of the battery cell assemblies 200 that are adjacent along the longitudinal direction occupy a non-overlapping area on the upper surface of the cross beams 130.

Describing the side frame 230 of such a configuration of the battery cell assembly 200 in more detail, the supporting block 236 of the side frame 230 is a protrusion part for supporting and fixing the battery cell assembly 200 with respect to the cross beam 130, wherein the supporting block 236 is seated on the upper surface of the cross beam 130. In addition, the battery cell assembly 200 is fixed with respect to the cross beam 130 by bolts 240 that vertically pass through the supporting block 236, wherein the head of the larger diameter bolt 240 is supported in the inlet of the through hole 238 so that the fastening force of the bolt 240 acts on the battery cell assembly 200. Here, as shown in FIG. 3, the inlet of the through hole 238 may be spaced downwardly from the upper surface of the supporting block 236 such that the head of the bolt 240 does not protrude outwardly.

FIG. 4 illustrates the mounting of the overall battery cell assembly 200 within the battery pack 10. Adjacent battery cell assemblies 200 along the longitudinal direction, sharing a cross beam 130 between them, are supported and fixed to each other. For this, the supporting blocks 236 of the adjacent battery cell assemblies 200 along the longitudinal direction occupy a non-overlapping area on the upper surface of the cross beams 130. For example, the plurality of supporting blocks 236 of adjacent battery cell assemblies 200 along the longitudinal direction may be arranged alternately with respect to the upper surface of the cross beam 130.

As shown in the plan view of FIG. 4, the side frames 230 of each of the adjacent battery cell assemblies 200 between the cross beams 130, and in particular the supporting blocks 236 share one cross beam 130 upper surface, but do not overlap each other top and bottom. Accordingly, if a problem occurs with only one of the battery cells 210 in the assembled battery pack 10, only the problematic battery cell assembly 200 can be easily removed upwardly without any interference, regardless of the order of assembly. In this way, the battery pack 10 of the present disclosure can be maintained by replacing the problematic battery cell 210 or battery cell assembly 200, thereby allowing the battery pack 10 to be utilized to the designed lifespan without disuse of the entire expensive battery pack 10.

Further, in some embodiments, the contact surface between the bottom surface of the battery cell assembly 200 and the base plate 110 may be interposed with a gap filler. The gap filler plays a role in filling the gap (caused by surface roughness, flatness, etc.) that exists between the bottom surface of the battery cell assembly 200 and the base plate 110, thereby facilitating heat conduction between the two, and has a certain level of thermal conductivity for smooth heat conduction.

In the battery pack 10 of the present disclosure, it may be desirable to apply an unhardened paste-type gap filler 150 as the gap filler. For example, the paste-type gap filler 150 applied in the present disclosure may have unhardened properties over long time such as the lifespan or service warranty period of the battery pack 10, despite the passage of time, temperature fluctuations due to repeated charging and discharging, and the like. By such an unhardened gap filler, the risk of breakage of the battery cells 210 due to a hardened gap filler during removal of the battery cell assembly 200 is eliminated, thereby ensuring that the problematic battery cells 210 can be freely replaced. As an example of such a paste-type gap filler 150, a gap filler having the trade name "TGF 3010 APS" from Henkel AG & Co. KGaA, Düsseldorf, Germany, can be applied.

### [second embodiment]

A second embodiment of the present disclosure is directed to a battery pack 10 comprising a configuration to assist in the stable withdrawal of a heavy weight battery cell assembly (200) during removal of a battery cell assembly 200 comprising a problematic battery cell (210).

The battery pack 10, according to a second embodiment, further comprises a clip band 300 coupling to a side plate 232 of a side frame 230 to support a bottom surface of a plurality of battery cells 210 comprising the battery cell assembly 200. The clip band 300 in engagement with the side frame 230 supports the bottom surface of the overall plurality of battery cells 210 comprising the battery cell assembly 200, thereby preventing the battery cells 210 from detaching, falling, and the like when the battery cell assembly 200 is detached from the base plate 110.

In particular, the battery pack 10 of the present disclosure is also suitable for configuration as a battery pack 10 with a simplified cell-to-pack structure, wherein the battery cell assembly 200 has no separate module housing wrapping around the plurality of battery cells 210, and the clip band 300 is a configuration that assists in maintenance of the battery pack 10 with a cell-to-pack structure.

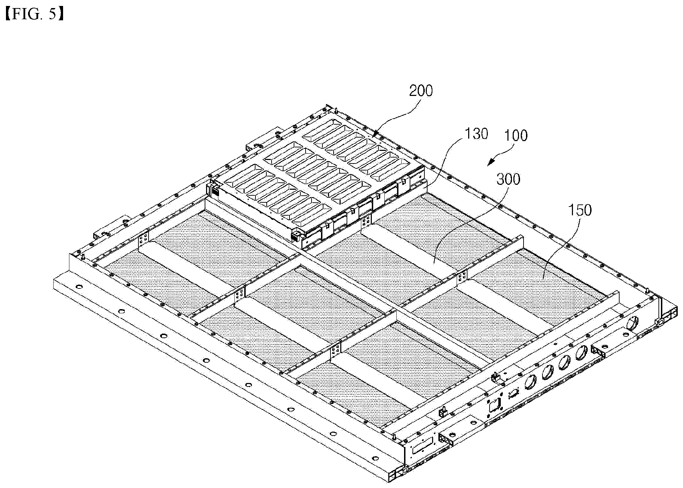

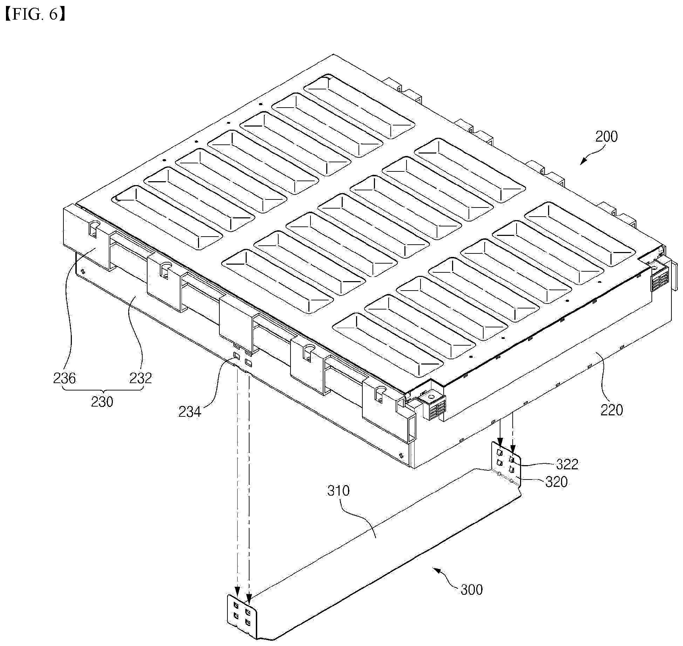

FIG. 5 is a drawing illustrating a structure in which clip bands are disposed on the pack case, and FIG. 6 is a drawing illustrating a structure in which the clip bands are coupled to the battery cell assembly. The clip band 300 in the embodiment illustrated includes a band body 310 supporting a bottom surface of a plurality of battery cells and fastening parts 320 bent at both ends of the band body 310. By engaging the fastening parts 320 at both ends to the side frame 230, the clip band 300 is fixed to the battery cell assembly 200.

Referring to FIG. 5, a clip band 300 is mounted to the pack case 100, which may be configured to automatically engage the clip band 300 to the side frame 230 of the battery cell assembly 200 when the battery cell assembly 200 is accommodated in the pack case 100. By preparing the clip band 300 integral to the pack case 100, the process of manufacturing the pack case 100 may be completed in a unified manner, separate from the process of preparing the battery cell assembly 200. In addition, since no gap filler need be applied to the clip bands 300, expensive gap filler can be saved in the area occupied by the clip bands 300 on the base plate 110.

The clip bands 300 automatically engage the side frames 230 of the battery cell assembly 200 when the battery cell assembly 200 is accommodated within the pack case 100, and further, the clip bands 300 remain engaged with the side frames 230 when the battery cell assembly 200 is removed, As shown in FIG. 6, the fastening parts 320 at both ends of the clip band 300 may comprise snap pins 322 that are incised in an U shape and then bent inwardly, and correspondingly, the side plate 232 of the side frame 230 may comprise snap grooves 234 in which the snap pins 322 are engaged.

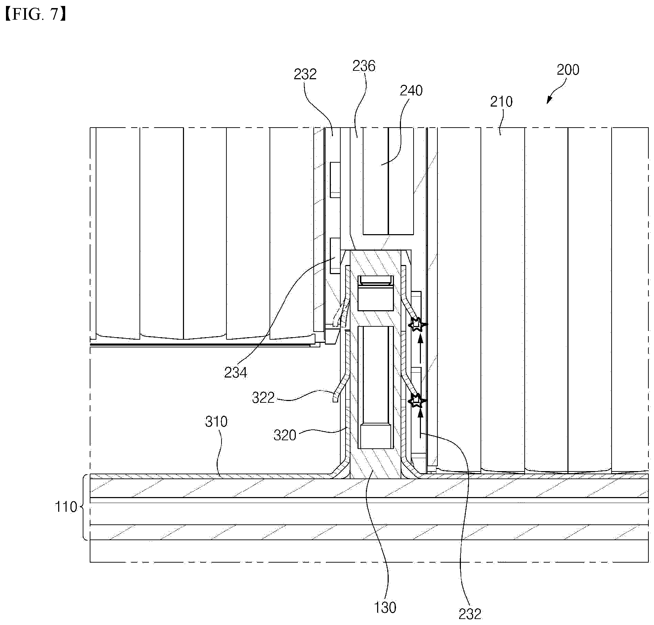

FIG. 7 is a cross-sectional view illustrating a structure in which a battery cell assembly is coupled to a clip band disposed on a pack case. The battery cell assembly 200 on the left side of FIG. 7 is in the state of mounting to the pack case 100, and the snap pin 322 of the fastening part 320 tilts downward with respect to the side plate 232, so that the snap pin 322 pressed onto the side plate 232 of the battery cell assembly 200 entering the downwardly will naturally enter the snap groove 234 while undergoing elastic deformation.

In contrast, in the case of the battery cell assembly 200 already mounted in the pack case 100 shown on the right side of FIG. 7, when an upwardly withdrawing force is applied, the free end of the downwardly inclined snap pin 322 contacts and resists the wall surface of the snap groove 234, thereby causing the clip band 300 to detach from the base plate 110 while maintaining the engagement with the side frame 230. In other words, this engagement between the clip band 300 and the side frame 230 can be described as a snap-fit structure that automatically engages under a downward load and does not separate under the load of a plurality of battery cells.

In addition, to enable the clip band 300 to be accurately positioned at a predetermined position of the pack case 100, the side of the cross beam 130 may be provided with a groove 132, and the fastening part 320 of the clip band 300 may be configured to be inserted into the groove 132, as shown in FIG. 5.

### [third embodiment]

In a third embodiment of the present disclosure, a manufacturing method for the aforementioned battery pack 10 is described.

The method of manufacturing a battery pack 10 according to the present disclosure includes a first step of preparing a pack case 100, as shown in FIG. 2, which includes a base plate 110, a side plate 120 coupled to the base plate 110 along a periphery thereof to form an accommodated space therein, and a cross beam 130 coupled to the base plate 110 to transversely divide the accommodated space inside the base plate 110.

Then, in a second step, the pack case 100 and the clip band 300 are prepared as a unit by inserting the clip band 300 into the grooves 132 formed in the sides of the cross beam 130, as shown in FIG. 5.

Here, after the second step, the method may further include step 2-1 of applying a paste-type gap filler 150 on the base plate 110. The paste-type gap filler 150 may be applied on the exposed base plate 110, avoiding interfering with the clip band 300, and the paste-type gap filler 150 may be a material that will not be harden for a sufficiently long period of time.

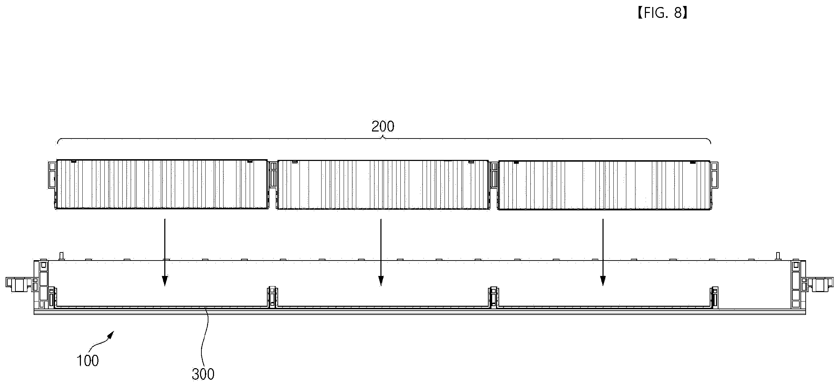

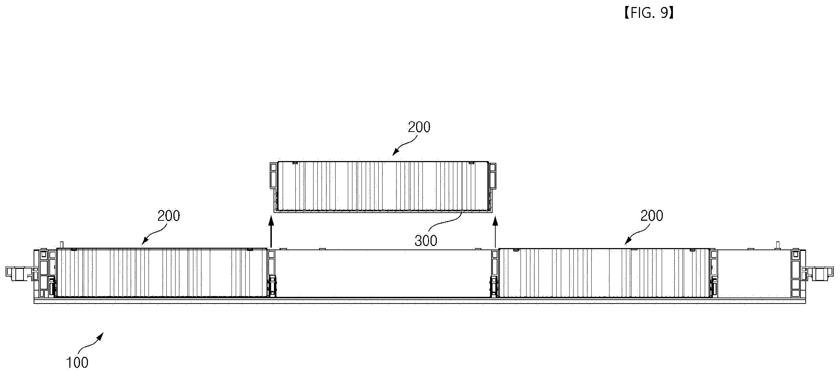

Then, in a third step, the battery cell assemblies 200 are mounted, one by one, in the plurality of accommodated spaces divided by the cross beam 130. The mounting battery cell assembly 200 has a side frame 230 that is fixed with respect to the cross beam 130, and the side frames 230 of adjacent battery cell assemblies 200 along the longitudinal direction share the upper surface of the cross beam 130 located therebetween and do not overlap each other top and bottom. Accordingly, the battery pack 10 of the present disclosure, as illustrated in FIG. 8 and FIG. 9, does not require a particular mounting order of the plurality of battery cell assemblies 200, and furthermore, upon removal of any of the battery cell assemblies 200, only that battery cell assembly 200 can be unfixed and drawn upwardly.

The side frame 230, in one embodiment, includes side plates 232 that wrap around the sides of the battery cell assemblies 200, and supporting blocks 236 that protrude against the side plates 232, such that the supporting blocks 236 of adjacent battery cell assemblies 200 along the longitudinal direction may occupy non-overlapping areas on the upper surface of the cross beam 130. Then, in a third step, the individual battery cell assemblies 200 may be fixed with respect to the cross beam 130 by bolts 240 vertically passing through the supporting blocks 236.

The clip band 300 may include a band body 310 supporting a bottom surface of the plurality of battery cells, and a fastening part 320 bent and stand at both ends of the band body 310, the fastening part 320 having an incised bent snap pin 322, and the side plate 232 of the side frame 230 may have a snap groove 234 in which the snap pin 322 are engaged.

The snap pins 322 may title downward with respect to the side plates 232, and the engagement between the clip band 300 and the side frame 230 may form a snap-fit structure that does not detach under the load of the plurality of battery cells, thereby allowing the clip band 300 to support the bottom surface of the plurality of battery cells 210 comprising the battery cell assembly 200 during removal of the battery cell assembly 200.

As above, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: battery pack
100: pack case
110: base plate
120: side plate
130: cross beam
132: groove
140: center beam
150: paste-type gap filler
200: battery cell assembly
210: battery cell
220: busbar frame assembly
230: side frame
232: side plate
234: snap groove
236: supporting block
238: through hole
240: bolt
300: clip band
310: band body
320: fastening part
322: snap pin

## Claims

1. A battery pack, comprising:
a base plate;
a side plate coupled to the base plate along a periphery of the base plate to form an accommodated space therein;
a cross beam coupled to the base plate to transversely divide the accommodated space on the base plate; and
battery cell assemblies mounted in the accommodated space divided by the cross beam;
wherein the battery cell assemblies have side frames fixed to the cross beam, and
wherein the side frames of adjacent battery cell assemblies along a longitudinal direction share an upper surface of the cross beam located therebetween.

2. The battery pack of claim 1, wherein the side frame comprises side plates wrapping around sides of the battery cell assemblies, and a plurality of supporting blocks projecting with respect to the side plates,
wherein the plurality of supporting blocks of adjacent battery cell assemblies along the longitudinal direction occupy non-overlapping areas on the upper surface of the cross beam.

3. The battery pack of claim 2, wherein the plurality of supporting blocks are arranged spaced apart from each other, and
wherein the plurality of supporting blocks of adjacent battery cell assemblies along the longitudinal direction are arranged alternately with respect to the upper surface of the cross beam.

4. The battery pack of claim 2, wherein the battery cell assembly is fixed to the cross beam by bolts vertically passing through the supporting blocks.

5. The battery pack of claim 1, further comprising a center beam coupled to the base plate to longitudinally divide the accommodated space on the base plate,
wherein the accommodated space is arranged in a grid by the cross beam and the center beam.

6. The battery pack of claim 2, further comprising clip bands coupled to the side plates of the side frames to support bottom surfaces of a plurality of battery cells forming the battery cell assembly.

7. The battery pack of claim 6, wherein the clip band comprises a band body supporting the bottom surface of the plurality of battery cells, and fastening parts bent at both ends of the band body, the fastening parts comprising incised bent snap pins, and
wherein the side plates of the side frame comprise snap grooves in which the snap pins are engaged.

8. The battery pack of claim 7, wherein the snap pin tilts downward with respect to the side plate, and
wherein an engagement between the clip band and the side frame forms a snap-fit structure that does not separate under a load of the plurality of battery cells.

9. The battery pack of claim 7, wherein a side of the cross beam comprises a groove, and
wherein the fastening part of the clip band is inserted into the groove.

10. The battery pack of claim 1, wherein a contact surface between a bottom surface of the battery cell assembly and the base plate is interposed with a paste-type gap filler, and
wherein the paste-type gap filler includes an unhardened material.

11. A manufacturing method of a battery pack, the manufacturing method comprising:
preparing a pack case comprising a base plate, a side plate coupled to the base plate along a periphery of the base plate to form an accommodating space therein, and a cross beam coupled to the base plate to transversely divide the accommodating space on the base plate;
inserting a clip band into a groove formed in a surface of the cross beam; and
mounting a battery cell assembly in a plurality of accommodating spaces divided by the cross beam.

12. The manufacturing method of the battery pack of claim 11, further comprising, after the inserting the clip band into the groove, applying a paste-type gap filler on the base plate,
wherein the paste-type gap filler includes an unhardened material.

13. The manufacturing method of the battery pack of claim 11, wherein the battery cell assembly comprises a side frame fixed to the cross beam, and
wherein the side frames of adjacent battery cell assemblies along a longitudinal direction share an upper surface of the cross beam located therebetween and do not overlap each other in a top and bottom direction.

14. The manufacturing method of the battery pack of claim 13, wherein the side frame comprises a side plate wrapping around a side of the battery cell assembly, and a supporting block projecting with respect to the side plate, and
wherein the supporting blocks of adjacent battery cell assemblies along the longitudinal direction occupy non-overlapping areas on the upper surface of the cross beam.

15. The manufacturing method of the battery pack of claim 14, wherein the mounting the battery cell assembly comprises fixing the battery cell assemblies to the cross beam by bolts vertically passing through the supporting blocks.

16. The manufacturing method of the battery pack of claim 14, wherein the clip band comprises a band body supporting a bottom surface of the plurality of battery cells, and fastening parts bent at both ends of the band body, the fastening parts comprising incised bent snap pins, and
wherein the side plates of the side frame comprise snap grooves in which the snap pins are engaged.

17. The manufacturing method of the battery pack of claim 16, wherein the snap pin tilts downward with respect to the side plate, and an engagement between the clip band and the side frame forms a snap-fit structure that is not separated by a load of the plurality of battery cells.
